# DEMANDE DE BREVET EUROPEEN

(11) **EP 2 337 174 A1**
(43) Date de publication de la demande: **22.06.2011**
(21) Numéro de dépôt: 10194632.5
(22) Date de dépôt: 10.12.2010
(51) Int. Cl.: H02G 3/04, H02G 3/08, H02G 3/06

(54) **Dispositif de raccordement étanche pour tube annelé, et application**

(30) Priorité: 15.12.2009 FR 0959002
(71) Demandeur: Legrand France, 87000 Limoges (FR); Legrand SNC, 87000 Limoges (FR)
(72) Inventeur: Boulegue, Didier, 87220, Feytiat (FR); Lacotte, Thierry, 87000, Limoges (FR); Thinet, Jean-Marc, 87350, Panazol (FR)
(74) Mandataire: Novagraaf Technologies

(57) **Abrégé**

L'invention concerne un dispositif de raccordement étanche pour un tube annelé, ce dispositif comprenant un organe d'étanchéité (2) formé au moins d'un manchon cylindrique creux (3), et d'une pluralité (4) de collerettes périphériques externes (41-43), portées par le manchon (3) et venant de matière avec lui.

Selon l'invention, l'organe d'étanchéité (2) est réalisé dans un matériau élastomère, les collerettes (41-43) sont annulaires et espacées les unes des autres le long de l'axe longitudinal (X) du manchon, et chaque collerette (41-43) peut se déformer par fermeture de l'angle (A_{K}) du cône (K) que forme la face (401) de cette collerette qui est tournée vers l'extrémité (301) du manchon qui est destinée à être introduite dans le tube.

## Description

L'invention concerne, de façon générale, les techniques d'étanchéité, notamment pour les appareillages électriques.

Plus précisément, l'invention concerne, selon un premier aspect, un dispositif de raccordement étanche pour un tube annelé présentant alternativement, suivant sa longueur, un diamètre interne minimal et un diamètre interne maximal, ce dispositif comprenant un organe d'étanchéité formé au moins d'un manchon cylindrique creux présentant un axe longitudinal, et d'une pluralité de collerettes périphériques externes, portées par le manchon et venant de matière avec le manchon, le manchon présentant un diamètre externe inférieur ou égal au diamètre minimal du tube, chaque collerette présentant un bord libre circulaire et un bord lié par lequel cette collerette se raccorde au manchon, et le manchon présentant une première extrémité par laquelle il est sélectivement introduit dans le tube, et une deuxième extrémité distante de la première extrémité le long de l'axe.

Un dispositif de ce type est par exemple décrit dans la demande japonaise de brevet JP 2005-176562.

Dans le dispositif connu de ce document antérieur, les collerettes sont en fait constituées par les spires successives d'un même filet de vis, et le raccordement entre l'organe d'étanchéité et le tube annelé est réalisé par l'intermédiaire d'une pièce supplémentaire vissée sur le filet de vis.

Dans ce contexte, l'invention vise à proposer un dispositif de raccordement étanche à l'air à pression constante, et donc à la poussière pour un tube annelé qui, non seulement présente une structure plus simple que celle de ce dispositif antérieur, mais qui, en outre, permette à un même organe d'étanchéité de se raccorder sur des tubes annelés présentant notamment des diamètres internes différents et des anneaux de forme, de dimensions, et de pas différents.

A cette fin, le dispositif de l'invention, par ailleurs conforme à la définition générique qu'en donne le préambule ci-dessus, est essentiellement **caractérisé en ce que** l'organe d'étanchéité est réalisé dans un matériau élastomère, en ce que les collerettes sont annulaires et espacées les unes des autres le long de l'axe longitudinal, en ce que chaque collerette présente une première face tournée vers la première extrémité du manchon et appartenant à un cône dont la pointe est située sur l'axe longitudinal, à plus grande distance de la deuxième extrémité du manchon que cette collerette, en ce que chaque collerette est déplaçable par déformation entre un état de repos dans lequel l'angle du cône de la première face de cette collerette est maximal et un état de contrainte extrême dans lequel l'angle de ce cône est minimal, et en ce que les bords libres des collerettes présentent des diamètres respectifs croissants à distance croissante de la première extrémité du manchon.

Par ailleurs, il est judicieux de prévoir que le manchon comporte au moins une section d'appui pour une collerette adjacente correspondante, chaque section d'appui étant décalée axialement vers la deuxième extrémité du manchon par rapport à la collerette correspondante, étant bordée, en direction de la première extrémité du manchon, par une restriction du diamètre externe du manchon, et offrant un appui à la collerette correspondante dans son état de contrainte extrême.

Dans un mode de réalisation optimal, le manchon comporte une section d'appui pour chaque collerette adjacente.

En outre, chaque section d'appui est avantageusement bordée par une restriction du diamètre externe du manchon, formée par un épaulement.

Dans le cas où l'organe d'étanchéité doit assurer non seulement une étanchéité périphérique, mais également une étanchéité suivant une direction axiale, cet organe d'étanchéité comprend en outre un voile d'obturation obturant le manchon, venant de matière avec ce manchon, et s'étendant transversalement à l'axe longitudinal.

Dans ce cas, l'organe d'étanchéité peut présenter un rebord entourant le manchon et le voile d'obturation et présentant un diamètre supérieur au diamètre du bord libre de la collerette ayant le plus grand diamètre.

Le voile d'obturation peut lui-même présenter une épaisseur inférieure à l'épaisseur du rebord, de manière à pouvoir constituer un opercule susceptible d'être défoncé, par exemple par enfoncement à force d'un conducteur électrique.

De préférence, une section d'appui du dispositif se raccorde de façon continue au rebord.

Dans le cas où le dispositif de l'invention est considéré comme comprenant, en plus de l'organe d'étanchéité, le tube annelé dans lequel est inséré cet organe d'étanchéité, où les collerettes de l'organe d'étanchéité sont espacées l'une de l'autre suivant un premier pas, et où le tube annelé porte des anneaux espacés l'un de l'autre suivant un deuxième pas, il est judicieux de faire en sorte que le deuxième pas ait une valeur comprise entre 95% et 130% de la valeur du premier pas.

Le dispositif peut aussi comprendre, en plus de l'organe d'étanchéité, un boîtier délimité par une paroi traversée par au moins un orifice, l'organe d'étanchéité étant inséré dans l'orifice pour obturer de façon étanche la paroi du boîtier.

L'invention concerne également l'application d'un dispositif tel que précédemment défini à la réalisation d'une installation électrique étanche.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en coupe d'un dispositif conforme à un mode de réalisation possible de l'invention et conçu pour se raccorder de façon étanche à un tube annelé;
- la figure 2 est une vue agrandie d'un détail du dispositif illustré à la figure 1, et d'un détail correspondant d'un tube annelé dans lequel ce dispositif est inséré;
- la figure 3 est une vue agrandie d'un deuxième détail du dispositif illustré à la figure 1, et d'un détail correspondant d'un tube annelé dans lequel ce dispositif est inséré;
- la figure 4 est une vue agrandie d'un troisième détail du dispositif illustré à la figure 1, et d'un détail correspondant d'un tube annelé dans lequel ce dispositif est inséré; et

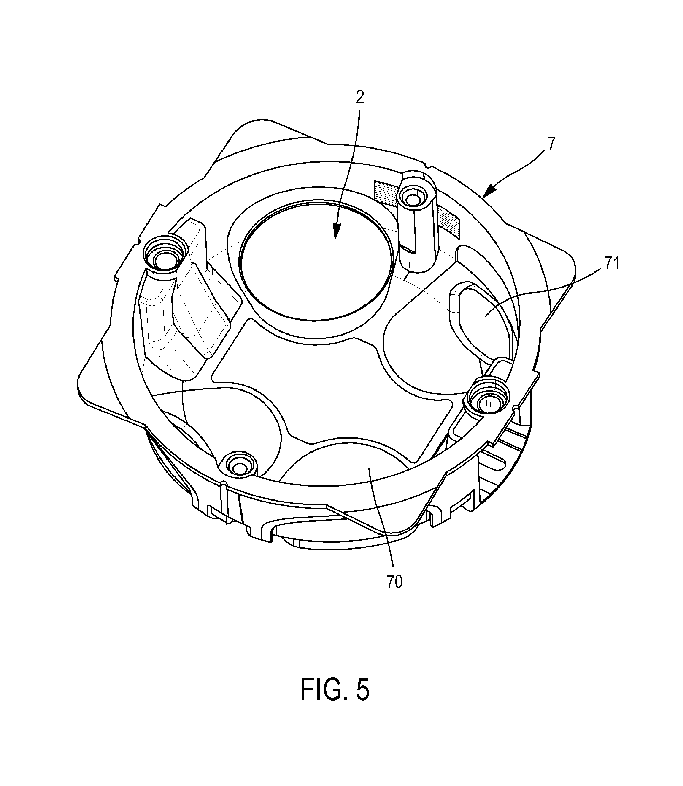

- la figure 5 est une vue en perspective d'un autre mode de réalisation du dispositif de l'invention, comprenant un boîtier et un organe d'étanchéité.

Comme annoncé précédemment, l'invention concerne un dispositif de raccordement étanche pour un tube annelé 1.

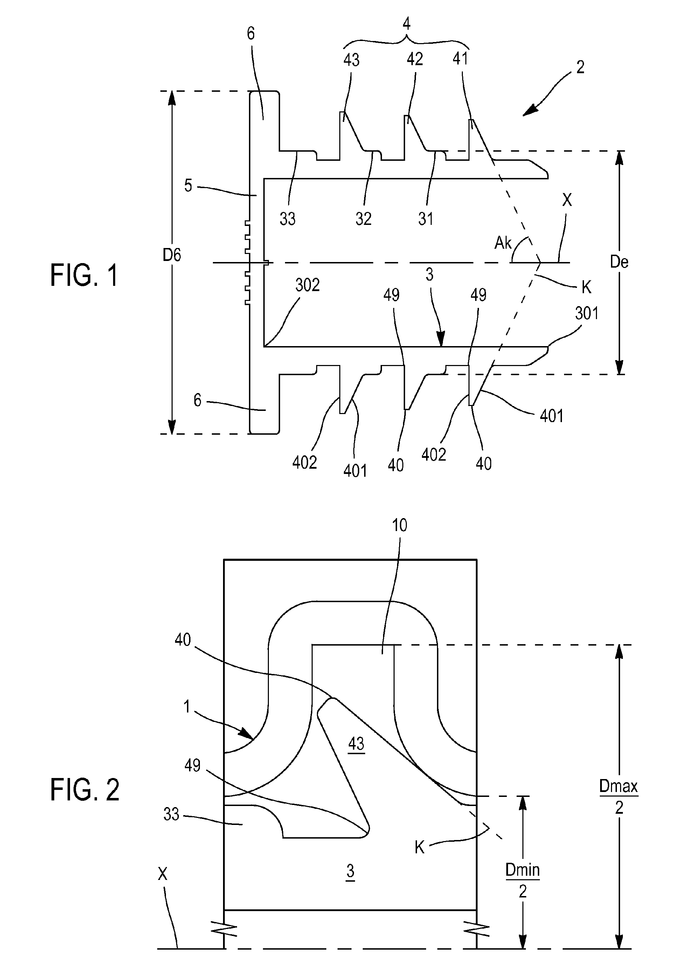

Par construction et comme le montrent les figures 2 à 4, un tube annelé est formé d'anneaux 10 juxtaposés suivant la longueur de ce tube et séparés par des zones de restriction radiale, le tube 1 présentant donc alternativement, suivant sa longueur, un diamètre interne minimal Dmin et un diamètre interne maximal Dmax.

Le dispositif de raccordement étanche concerné comprend un organe d'étanchéité 2 formé au moins d'un manchon cylindrique creux 3 et d'une pluralité 4 de collerettes périphériques externes telles que 41 à 43.

Le manchon cylindrique 3 s'étend suivant un axe longitudinal X et présente un diamètre externe De inférieur ou égal au diamètre minimal Dmin du tube 1.

Par ailleurs, le manchon 3 présente une première extrémité 301 par laquelle il est sélectivement introduit dans le tube 1, et une deuxième extrémité 302 distante de la première extrémité 301 le long de l'axe longitudinal X.

Chacune des collerettes 41 à 43 est portée par le manchon 3 et vient de matière avec ce manchon.

En outre, chaque collerette 41 à 43 présente un bord libre circulaire 40, et un bord lié 49 par lequel cette collerette se raccorde au manchon 3.

Selon l'invention, l'organe d'étanchéité 2 est réalisé dans un matériau élastomère, et les collerettes 41 à 43 sont annulaires et espacées les unes des autres le long de l'axe longitudinal X.

Chacune des collerettes 41 à 43 présente une première face 401 tournée vers la première extrémité 301 du manchon 3 et une deuxième face 402 tournée vers la deuxième extrémité 302 de ce manchon.

La première face 401 de chacune des collerettes 41 à 43 appartient (figure 1) à un cône K dont la pointe est située sur l'axe longitudinal X, à plus grande distance de la deuxième extrémité 302 du manchon 3 que cette collerette.

La deuxième face 402 de chacune des collerettes 41 à 43 s'étend par exemple dans un plan perpendiculaire à l'axe longitudinal X.

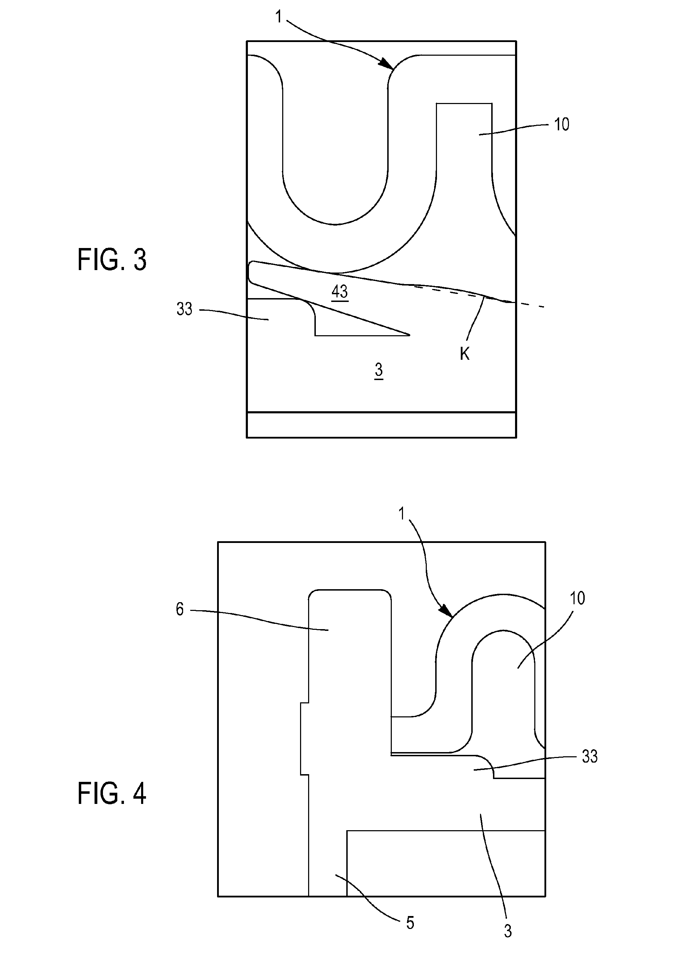

Comme l'organe d'étanchéité 2 est réalisé dans un matériau élastomère, chacune des collerettes 41 à 43 peut être déplacée, par déformation, entre un état de repos visible sur la figure 1 et dans lequel l'angle A_{K} du cône K de la première face 401 de cette collerette est maximal et par exemple compris entre 60 et 70 degrés, et un état de contrainte extrême visible sur la figure 3 et dans lequel l'angle A_{K} de ce cône K est minimal.

Comme le montre encore la figure 3, chaque collerette, telle que la collerette 43 en l'occurrence, atteint son état de contrainte extrême lorsqu'elle se trouve en regard d'une section de diamètre minimal Dmin du tube 1.

En revanche, comme le montre la figure 2, chaque collerette qui s'inscrit dans l'un des anneaux 10 du tube 1 peut adopter un état de contrainte intermédiaire, dans lequel sa déformation est intermédiaire entre l'absence de déformation qui caractérise son état de repos et la déformation maximale qui caractérise son état de contrainte extrême.

Pour améliorer encore la capacité du dispositif de raccordement étanche à s'adapter à des tubes annelés de différents diamètres, les bords libres 40 des collerettes 41 à 43 présentent de préférence des diamètres respectifs croissants à distance croissante de la première extrémité 301 du manchon 3.

Ainsi, le diamètre du bord libre 40 de la collerette 43 est supérieur au diamètre du bord libre 40 de la collerette 42, qui est lui-même supérieur au diamètre du bord libre 40 de la collerette 41.

Pour augmenter l'étanchéité du dispositif de raccordement 3 de l'invention, le manchon 3 peut comporter une ou plusieurs sections d'appui telles que 31 à 33, chaque section d'appui ayant pour fonction d'offrir un appui à une collerette correspondante lorsque cette collerette correspondante est dans son état de contrainte extrême, comme le montre la figure 3.

De préférence, le manchon 3 comporte une section d'appui telle que 31 à 33 pour chacune des collerettes adjacentes 41 à 43.

Chacune des sections d'appui 31 à 33 est décalée axialement, vers la deuxième extrémité 302 du manchon 3, par rapport à la collerette correspondante 41 à 43.

En outre, chacune des sections d'appui 31 à 33 est bordée, en direction de la première extrémité 301 du manchon 3, par une restriction du diamètre externe De de ce manchon 3.

Cette restriction de diamètre, qui dans le mode de réalisation illustré est formée par un épaulement, permet à la première face 401 de chaque collerette de conserver une forme pratiquement conique même dans son état de déformation extrême, comme le montre la figure 3.

Dans son mode de réalisation le plus complet, l'organe d'étanchéité 2 comprend en outre un voile d'obturation 5 qui obture le manchon 3, qui vient de matière avec ce manchon 3, et qui s'étend transversalement à l'axe longitudinal X.

L'organe d'étanchéité 2 peut aussi avantageusement présenter un rebord 6 entourant le manchon 3 et le voile d'obturation 5.

Ce rebord 6, qui joue notamment le rôle de butée, présente un diamètre D6 supérieur au diamètre du bord libre 40 de la collerette 43 ayant le plus grand diamètre et présente une épaisseur supérieure à l'épaisseur du voile d'obturation 5.

Le rebord 6 présente ainsi une résistance mécanique relativement importante, alors que le voile d'obturation 5 remplit la fonction d'un opercule susceptible d'être défoncé, par exemple par enfoncement à force d'un conducteur électrique.

Comme le montre notamment la figure 1, la section d'appui 33 destinée à recevoir la collerette 43 de plus grand diamètre se raccorde avantageusement de façon continue au rebord 6.

Ainsi, bien que les différentes collerettes puissent être dans des états de contrainte différents, le tube 1 est avantageusement découpé de manière que la section d'appui 33 obture une extrémité du tube de diamètre minimal, comme illustré à la figure 4.

Il peut être judicieux de choisir le pas d'espacement des collerettes 41 à 43 le long du manchon 3 en fonction du pas d'espacement des anneaux 10 le long du tube 1.

Plus précisément, il est souhaitable que le pas des anneaux ait une valeur comprise entre 95% et 130% de la valeur du pas des collerettes.

Le dispositif de l'invention est particulièrement applicable à la réalisation d'une installation électrique étanche.

Dans une telle application, le dispositif de l'invention peut comprendre, en plus de l'organe d'étanchéité 2, un boîtier 7 constituant par exemple une boîte d'encastrement.

Un tel boîtier 7 est traditionnellement délimité par une paroi 70 traversée par un ou plusieurs orifices 71, et l'organe d'étanchéité 2 peut être inséré dans l'un de ces orifices pour obturer de façon étanche la paroi 70 du boîtier.

## Revendications

1. Dispositif de raccordement étanche pour un tube annelé (1) présentant alternativement, suivant sa longueur, un diamètre interne minimal (Dmin) et un diamètre interne maximal (Dmax), ce dispositif comprenant un organe d'étanchéité (2) formé au moins d'un manchon cylindrique creux (3) présentant un axe longitudinal (X), et d'une pluralité (4) de collerettes périphériques externes (41-43), portées par le manchon (3) et venant de matière avec le manchon (3), ce manchon présentant un diamètre externe (De) inférieur ou égal au diamètre minimal (Dmin) du tube (1), chaque collerette (41-43) présentant un bord libre circulaire (40) et un bord lié (49) par lequel cette collerette (41-43) se raccorde au manchon (3), et le manchon (3) présentant une première extrémité (301) par laquelle il est sélectivement introduit dans le tube (1), et une deuxième extrémité (302) distante de la première extrémité (301) le long de l'axe (X), **caractérisé en ce que** l'organe d'étanchéité (2) est réalisé dans un matériau élastomère, **en ce que** les collerettes (41-43) sont annulaires et espacées les unes des autres le long de l'axe longitudinal (X), **en ce que** chaque collerette (41-43) présente une première face (401) tournée vers la première extrémité (301) du manchon (3) et appartenant à un cône (K) dont la pointe est située sur l'axe longitudinal (X), à plus grande distance de la deuxième extrémité (302) du manchon (3) que cette collerette (41-43), **en ce que** chaque collerette (41-43) est déplaçable par déformation entre un état de repos dans lequel l'angle (A_{K}) du cône (K) de la première face (401) de cette collerette est maximal et un état de contrainte extrême dans lequel l'angle (A_{K}) de ce cône (K) est minimal, et **en ce que** les bords libres (40) des collerettes (41-43) présentent des diamètres respectifs croissants à distance croissante de la première extrémité (301) du manchon (3).

2. Dispositif suivant la revendication 1, **caractérisé en ce que** le manchon (3) comporte au moins une section d'appui (31-33) pour une collerette adjacente correspondante (41-43), chaque section d'appui (31-33) étant décalée axialement vers la deuxième extrémité (302) du manchon (3) par rapport à la collerette correspondante (41-43), étant bordée, en direction de la première extrémité du manchon, par une restriction du diamètre externe du manchon (3), et offrant un appui à la collerette correspondante (41-43) dans son état de contrainte extrême.

3. Dispositif suivant la revendication 2, **caractérisé en ce que** le manchon (3) comporte une section d'appui (31-33) pour chaque collerette adjacente (41-43).

4. Dispositif suivant l'une quelconque des revendications précédentes 2 et 3, **caractérisé en ce que** chaque section d'appui (31-33) est bordée par une restriction du diamètre externe du manchon (3), formée par un épaulement.

5. Dispositif suivant l'une quelconque des revendications précédentes, **caractérisé en ce que** l'organe d'étanchéité (2) comprend en outre un voile d'obturation (5) obturant le manchon (3), venant de matière avec ce manchon (3), et s'étendant transversalement à l'axe longitudinal (X).

6. Dispositif suivant la revendication 5, **caractérisé en ce que** l'organe d'étanchéité (2) présente un rebord (6) entourant le manchon (3) et le voile d'obturation (5) et présentant un diamètre (D6) supérieur au diamètre du bord libre (40) de la collerette (43) ayant le plus grand diamètre.

7. Dispositif suivant la revendication 6, **caractérisé en ce que** le voile d'obturation (5) présente une épaisseur inférieure à l'épaisseur du rebord (6).

8. Dispositif suivant l'une quelconque des revendications 6 et 7 combinée à la revendication 2, **caractérisé en ce qu'il** comprend une section d'appui (33) se raccordant de façon continue au rebord (6).

9. Dispositif suivant l'une quelconque des revendications précédentes, **caractérisé en ce qu'il** comprend, en plus de l'organe d'étanchéité (2), le tube annelé (1) dans lequel est inséré cet organe d'étanchéité, **en ce que** les collerettes (41-43) de l'organe d'étanchéité (2) sont espacées l'une de l'autre suivant un premier pas, **en ce que** le tube annelé (1) porte des anneaux (10) espacés l'un de l'autre suivant un deuxième pas, et **en ce que** le deuxième pas a une valeur comprise entre 95% et 130% de la valeur du premier pas.

10. Dispositif suivant l'une quelconque des revendications précédentes combinée à la revendication 5, **caractérisé en ce qu'il** comprend, en plus de l'organe d'étanchéité (2), un boîtier (7) délimité par une paroi (70) traversée par au moins un orifice (71), et **en ce que** l'organe d'étanchéité (2) est inséré dans l'orifice pour obturer de façon étanche la paroi (70) du boîtier.

11. Application d'un dispositif suivant l'une quelconque des revendications précédentes à la réalisation d'une installation électrique étanche au moins à la poussière.
